(19) Europäisches Patentamt

European Patent Office

Office européen des brevets

(11) Publication number: 0 446 359 A1

## (12) EUROPEAN PATENT APPLICATION
## published in accordance with Art. 158(3) EPC

(21) Application number: 90912939.7

(22) Date of filing: 29.08.90

(86) International application number:
PCT/JP90/01097

(87) International publication number:
WO 91/05294 (18.04.91 91/09)

(51) Int. Cl.5: G05B 19/403, G05B 19/18

(30) Priority: 27.09.89 JP 251156/89

(43) Date of publication of application:
18.09.91 Bulletin 91/38

(84) Designated Contracting States:
DE FR GB

(71) Applicant: FANUC LTD.
3580, Shibokusa Aza-Komanba Oshinomura
Minamitsuru-gun, Yamanashi 401-05(JP)

(72) Inventor: FUJITA, Naoki Fanuc Mansion
Harimomi 6-203
3527-1 Shibokusa Oshinomura
Minamitsuru-gun Yamanashi 401-05(JP)
Inventor: MATSUMURA, Teruyuki
38-8, Matsugaya
Hachioji-shi Tokyo 192-03(JP)
Inventor: MAEDA, Hideaki Fanuc Dai-3
Vira-karamatsu
3527-1, Shibokusa Oshinomura
Minamitsuru-gun Yamanashi 401-05(JP)

(74) Representative: Brunner, Michael John et al
GILL JENNINGS & EVERY 53-64 Chancery
Lane
London WC2A 1HN(GB)

(54) METHOD OF DATA LOADING IN NUMERIC CONTROLLER.

(57) A method of loading those data itemized in a plurality of memories into a predetermined memory for use in a numeric controller (CNC). The data (111 ~ 114) stored in the first memory are loaded to a predetermined memory. When the second memory storing data (211 ~ 215) has data (215) for an item (105) which is not in the first memory, only the data (215) is additionally loaded from the second memory to the predetermined memory. In other words, the data (111 ~ 114) stored in the first memory (non-volatile memory) are loaded preferentially to the predetermined memory, and subsequently the data (215) for the additional item (105) is loaded from the second memory (ROM). Accordingly, all existing data prepared for different machines can be used freely, and an operator can make a new machining program on the basis of standard data.

Technical Field

The present invention relates to a data loading method for a numerical control device, and more particularly, to a data loading method for a numerical control device which alleviates any burden on the operator when carrying out a leveling up of functions, etc.

Background Art

In numerical control devices (CNC) having an automatic programming function, material data which defines standard machining conditions according to materials of workpieces and types of machining is stored in a ROM. This data is revised for individual machines and is stored in a nonvolatile memory, and when power is supplied, the material data stored in the nonvolatile memory is automatically loaded to a work RAM. Therefore, during programming, the machining condition can be determined only by designating the material.

When for example, a leveling up of a system such as addition of a new machining function, is carried out, the ROM is replaced, and since an item for a machining condition corresponding to the new machining does not exist in the material data to be loaded from the nonvolatile memory, when programming the operator must enter each piece of data individually to enable the required machining to be executed. If, on the other hand, the material data stored in the ROM is loaded in the work RAM, to adopt new standard data for the new machining, all of the material data is replaced with that standard data, and thus the machining conditions for the other machining operations must be revised.

Disclosure of the Invention

The present invention has been made in view of the aforesaid circumstances, and an object thereof is to provide a data loading method for a numerical control device which alleviates any burden on the operator when carrying out a leveling up of functions, etc.

To achieve the above object, according to the present invention, there is provided a data loading method for a numerical control device (CNC) in which data stored in a plurality of memories and set according to items is loaded in a predetermined memory, comprising the steps of, loading data stored in a first memory to the predetermined memory, discriminating specific data of an item stored in a second memory but not stored in the first memory, and loading only the specific data from the second memory to the predetermined memory.

The data stored in the first memory (nonvolatile memory) is preferentially loaded in the predetermined memory (work RAM), and then data of an item stored in the second memory (ROM) but not in the first memory is loaded. Accordingly, conventional data set in conformity with individual machines can be utilized as is, and the operator is able to easily program a new machining based on the standard data.

Brief Description of the Drawings
Fig. 1 is a diagram illustrating a data loading method according to the present invention;
Fig. 2 is a flowchart according to the embodiment of the present invention; and
Fig. 3 is a block diagram showing the arrangement of a numerical control device for carrying out the present invention.

Best Mode of Carrying Out the Invention An embodiment of the present invention will be hereinafter described with reference to the drawings.

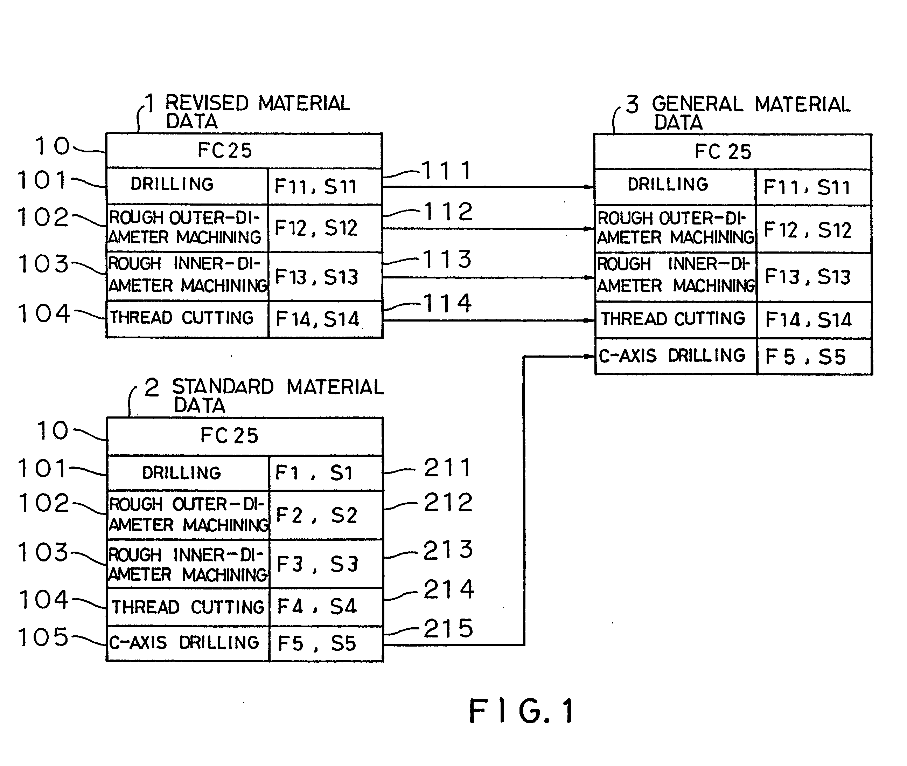

Figure 1 is a diagram illustrating a data loading method of the present invention. As shown in Fig. 1, existing revised material data 1 is stored in a nonvolatile memory of a numerical control device. In the revised material data 1, machining conditions matched with the characteristics of an actual machine are set according to materials of the workpieces and the types of machining. Namely, in summary, the machining conditions of each machining operation are shown only for a material 10 (FC25), and this applies to standard material data (2) and general material data (3), mentioned later.

In the revised material data 1, for a machining item 101 (drilling) of the material 10, a feed speed F11 and a spindle revolution number S11 are set as a machining condition 111, and for a machining item 102 (rough outer-diameter machining), a feed speed F12 and a spindle revolution number S12 are set as a machining condition 112. Similarly, machining conditions 113 and 114 are set for machining items 103 (rough inner-diameter machining) and 104 (thread cutting), respectively.

In the meantime, a new ROM, which has been set in place of an old ROM due to a leveling up of a function, stores standard material data 2. In the standard material data 2, standard machining conditions 211, ... 214 are set for the machining items 101, ... 104, respectively, and a standard machining condition 215 specifying a feed speed F5 and a spindle revolution number S5 is set for a new machining item 105 (C-axis drilling).

At the time at which power is supplied, each of the machining conditions in the revised material data 1, and the machining condition of the item in the standard material data 2 that does not exist in the revised material data 1, i.e., the machining condition 215, are loaded in the work RAM, to generate general material data 3.

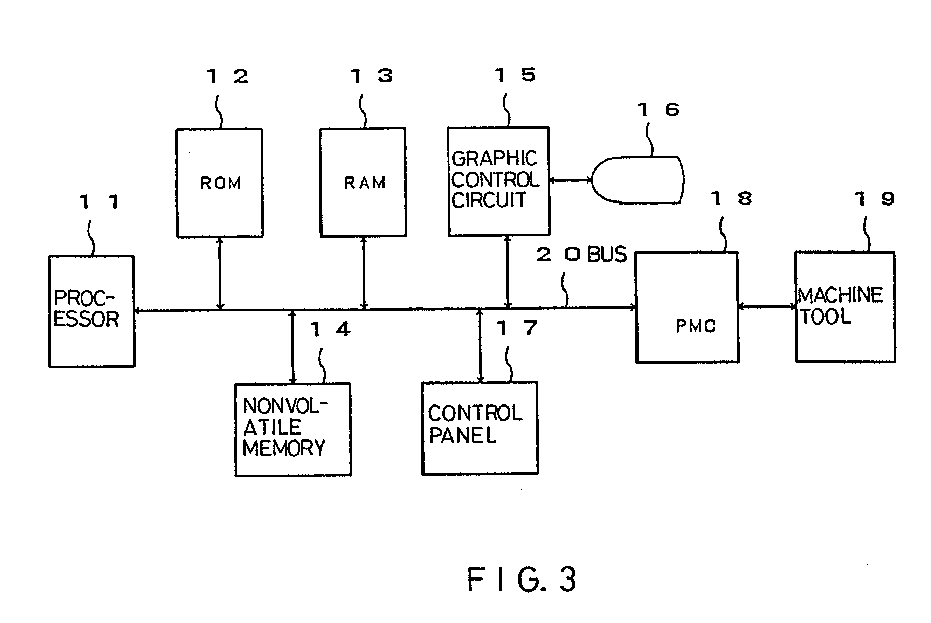

Figure 3 is a diagram schematically illustrating the hardware of a numerical control device for carrying out the present invention. A processor 11 controls the whole numerical control device according to a system program stored in a ROM 12. An EPROM or EEPROM is used for the ROM 12. A DRAM or the like is used for a RAM 13, in which various data or input/output signals are stored, and a part thereof is used as the aforementioned work RAM. A CMOS backed up by a battery is used for a nonvolatile memory 14, for storing material data, parameters, tool correction amounts, and the like which should be held after a cutoff of the power supply.

A graphic control circuit 15 converts digital signals to signals for display, and supplies these signals to a display unit 16. A CRT or a liquid crystal display device is used for the display unit 16, to display the general material data, positions of individual axes, and parameters, etc. A control panel 17 includes a keyboard, etc., and is used for inputting various data or for operating a machine tool 19. These components are connected to each other by a bus 20.

A PMC 18 (programmable machine controller) receives an output signal via the bus 20, processes the output signal in accordance with a sequence program, and controls the machine tool 19, and further, receives an input signal from the machine side, processes it in accordance with the sequence program, and transfers the input signal to the processor 11 via the bus 20.

In the figure, components such as an axis control circuit, a servo amplifier, a servomotor, a spindle amplifier and a spindle motor are omitted. The system may be constituted by a multiprocessor system using a plurality of processors.

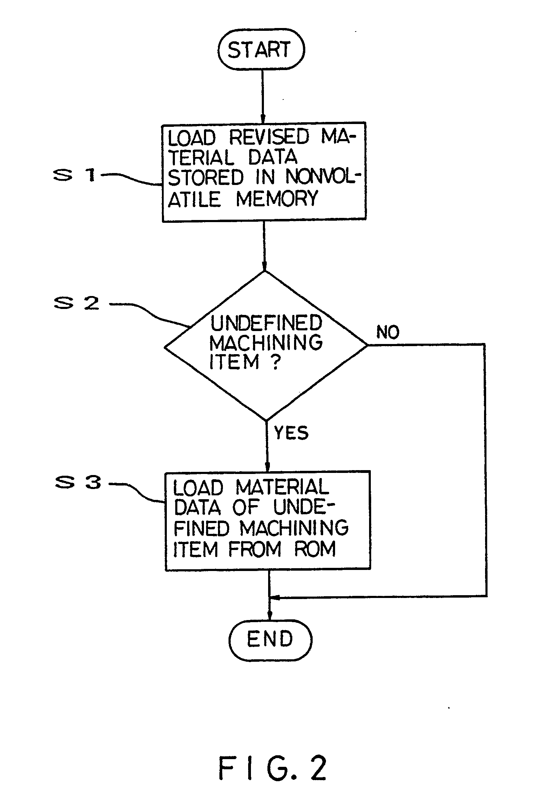

Figure 2 is a flowchart showing a loading of material data when power is supplied to the above numerical control device. In the figure, numerals following the letter S show the step number.

[S1] The revised material data stored in the nonvolatile memory is loaded in the work RAM.

[S2] It is determined whether or not the machining items of the standard material data stored in the ROM include any machining item that does not exist in the machining items of the revised material data already loaded; if such a machining item exists, the program proceeds to Step 3, and if not, the program ends.

[S3] Only the machining condition of the new machining item is loaded from the ROM into the work RAM.

According to the present invention, as described above, since the data stored in the first memory is preferentially loaded and the data of the item stored only in the second memory and not in the first memory is loaded from the second memory, existing data set in conformity with the machine can be continuously utilized if, for example, the system is leveled up, and standard data for a new machining can be determined at the same time, which reduces any burden on the operator.

## Claims

1. A data loading method for a numerical control device (CNC) in which data set according to items and stored in a plurality of memories is loaded into a predetermined memory, comprising the steps of:
    loading data stored in a first memory to the predetermined memory;
    discriminating specific data of an item stored in a second memory but not stored in the first memory; and
    loading only the specific data from the second memory to the predetermined memory.

2. A data loading method for a numerical control device according to claim 1, wherein said data includes machining conditions set according to materials of workpieces and types of machining.

3. A data loading method for a numerical control device according to claim 1, wherein said first memory comprises a nonvolatile memory.

4. A data loading method for a numerical control device according to claim 1, wherein said second memory comprises a ROM.

5. A data loading method for a numerical control device according to claim 1, wherein each of said steps is automatically carried out when power is supplied.

**1 REVISED MATERIAL DATA**

| FC 25 | |
|---|---|
| DRILLING | F11, S11 |
| ROUGH OUTER-DIAMETER MACHINING | F12, S12 |
| ROUGH INNER-DIAMETER MACHINING | F13, S13 |
| THREAD CUTTING | F14, S14 |

**3 GENERAL MATERIAL DATA**

| FC 25 | |
|---|---|
| DRILLING | F11, S11 |
| ROUGH OUTER-DIAMETER MACHINING | F12, S12 |
| ROUGH INNER-DIAMETER MACHINING | F13, S13 |
| THREAD CUTTING | F14, S14 |
| C-AXIS DRILLING | F5, S5 |

**2 STANDARD MATERIAL DATA**

| FC 25 | |
|---|---|
| DRILLING | F1, S1 |
| ROUGH OUTER-DIAMETER MACHINING | F2, S2 |
| ROUGH INNER-DIAMETER MACHINING | F3, S3 |
| THREAD CUTTING | F4, S4 |
| C-AXIS DRILLING | F5, S5 |

FIG. 1

START

S1 — LOAD REVISED MA-
TERIAL DATA
STORED IN NONVOL-
ATILE MEMORY

S2 — UNDEFINED
MACHINING
ITEM ? — NO

YES

S3 — LOAD MATERIAL
DATA OF UNDE-
FINED MACHINING
ITEM FROM ROM

END

F I G. 2

FIG. 3

# INTERNATIONAL SEARCH REPORT

International Application No **PCT/JP90/01097**

## I. CLASSIFICATION OF SUBJECT MATTER (if several classification symbols apply, indicate all)

According to International Patent Classification (IPC) or to both National Classification and IPC

Int. Cl$^5$      G05B19/403, 19/18

## II. FIELDS SEARCHED

### Minimum Documentation Searched

| Classification System | Classification Symbols |
|---|---|
| IPC | G05B19/403, 19/18 |

### Documentation Searched other than Minimum Documentation to the Extent that such Documents are Included in the Fields Searched

| | |
|---|---|
| Jitsuyo Shinan Koho | 1971 - 1990 |
| Kokai Jitsuyo Shinan Koho | 1971 - 1990 |

## III. DOCUMENTS CONSIDERED TO BE RELEVANT

| Category* | Citation of Document, with indication, where appropriate, of the relevant passages | Relevant to Claim No. |
|---|---|---|
| A | JP, A, 62-14208 (Matsushita Electric Ind. Co., Ltd.), 22 January 1987 (22. 01. 87), (Family: none) | 1 - 5 |
| A | JP, A, 58-46408 (Yamazaki Tekkosho K.K.), 17 March 1983 (17. 03. 83), (Family: none) | 1 - 5 |
| A | JP, A, 60-229111 (Fanuc Ltd.), 14 November 1985 (14. 11. 85) & WO, A, 8504964 & EP, A, 179919 | 1 - 5 |

* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| November 29, 1990 (29. 11. 90) | December 10, 1990 (10. 12. 90) |

| International Searching Authority | Signature of Authorized Officer |
|---|---|
| Japanese Patent Office | |

Form PCT/ISA/210 (second sheet) (January 1985)